# EUROPEAN PATENT APPLICATION

(11) **EP 1 920 684 A2**
(43) Date of publication of application: **14.05.2008**
(21) Application number: 07119990.5
(22) Date of filing: 05.11.2007
(51) Int. Cl.: A47J 31/40

(54) **Fluid food heating device**

(30) Priority: 07.11.2006 JP 2006301318
(71) Applicant: Sanden Corporation, Isesaki-shi, Gunma 372-8502 (JP)
(72) Inventor: Kanuma, Yoshihiko, Isesaki-shi Gunma 372-8502 (JP); Shioya, Morihisa, Isesaki-shi Gunma 372-8502 (JP)
(74) Representative: Haley, Stephen

(57) **Abstract**

A fluid food heating device detects a temperature (Tw) of stored water in a cistern (12) through a temperature sensor (12c) arranged in the cistern (12), determines a steam jetting time (ths) by using the temperature (Tw) as a water temperature (Tw) of a computing equation for determining steam jetting time, and jets steam to a fluid food (AF) on the basis of the steam jetting time (ths) to heat the fluid food (AF) to a target temperature.

## Description

### Background of the invention

### Field of the invention

The present invention relates to a fluid food heating device for heating a fluid food to a target temperature by using steam.

### Description of the related art

A fluid food heating device of this kind includes: a steam generator for generating steam by heating and vaporizing water; and a steam jetting nozzle whose inlet is connected to an outlet of the steam generator via a duct. This fluid food heating device heats the fluid food with the steam jetted from the steam jetting nozzle by providing the steam generated in the steam generator into the steam jetting nozzle inserted into a fluid food.

Because a temperature of the fluid food heated by the jet steam can be controlled by a steam jetting time, there is generally adopted a method including steps of: determining the steam jetting time beforehand according to the quantity and kind of the fluid food to be heated and the like; and stopping a steam jetting when the steam jetting time has elapsed since the start of the steam jetting.

Apart from this method, there has also been proposed a method including steps of: inserting a temperature sensor together with the steam jetting nozzle into the fluid food; and stopping the steam jetting when the temperature detected by the temperature sensor has reached a target temperature after the start of the steam jetting (Japanese Patent Publication 2003-70644).

The former method, which stops the steam jetting when the predetermined steam jetting time has elapsed, has advantages that the mechanism can be simplified because the temperature sensor and parts for arranging the temperature sensor are unnecessary and that a control system and a program flow can be simplified because devices and treatment related to a temperature detection are unnecessary. In the former method, however, because the heat quantity obtained in the predetermined steam jetting time is constant, variations occur in the fluid food temperature after heating, which depends on a fluid food temperature before heating that varies due to the effect of the outside air temperature.

The latter method, which stops the steam jetting on the basis of the temperature detected by the temperature sensor, has an advantage that regardless of the temperature of the fluid food before heating, the fluid food can be heated to the target temperature on the basis of the temperature detected by the temperature sensor. In the latter method, however, in order to prevent a sensing function from being impaired by the fluid food adhering to the surface of the temperature sensor, it is necessary to use a mechanism and a treatment for cleaning the temperature sensor after extracting the temperature sensor from the fluid food after heating and, for this reason, the mechanism becomes complex and a control system and a program flow for operating the mechanism becomes complex.

### Brief summary of the invention

An object of the present invention is to provide a fluid food heating device capable of heating a fluid food to a target temperature regardless of a temperature of the fluid food before heating and without detecting the temperature of the fluid food during heating directly with a temperature sensor.

To achieve the above object, a fluid food heating device involved with the present invention, which jets steam from a steam jetting nozzle into a fluid food including a solid material and water provided in a cup and heats the fluid food to a target temperature by a jet steam, comprises: water temperature detecting means for detecting a temperature of the water to be provided in the cup; and steam jetting time determining means for determining a steam jetting time on the basis of a water temperature detected by the water temperature detecting means.

According to this fluid food heating device, the temperature of the water to be provided in the cap is detected by the water temperature detecting means and the steam injecting time is determined by the steam jetting time determining means on the basis of the water temperature detected by the water temperature detecting means. That is, it is possible to heat the fluid food to a target temperature by jetting the steam to the fluid food on the basis of the steam jetting time determined according to the water temperature regardless of the temperature of the fluid food before heating and without detecting the temperature of the fluid food during heating directly with a temperature sensor.

The above object and other objects, features and advantages of the present invention will become apparent from the following descriptions and accompanying drawings.

### Brief description of several views of the drawings

FIG. 1 is a block diagram of a fluid food heating device in an embodiment of the present invention;
FIG. 2 is an electric circuit diagram of the fluid food heating device shown in FIG. 1;
FIG. 3 is a flowchart of a steam generator heating that is executed in the fluid food heating device shown in FIG. 1;
FIG. 4 is a flowchart of a cooking of a fluid food that is executed in the fluid food heating device shown in FIG. 1;
FIG. 5 is an explanatory diagram of a determination method executed at a steam jetting time determining step in FIG. 4;
FIG. 6 is an explanatory diagram of an operation of the fluid food heating device shown in FIG. 1;
FIG. 7 is an explanatory diagram of the operation of the fluid food heating device shown in FIG. 1;
FIG. 8 is an explanatory diagram of the operation of the fluid food heating device shown in FIG. 1;
FIG. 9 is an explanatory diagram of the operation of the fluid food heating device shown in FIG. 1; and
FIG. 10 is a flowchart of the cooking of the fluid food in another embodiment of the present invention.

### Detailed description of the invention

### [An embodiment of the present invention]

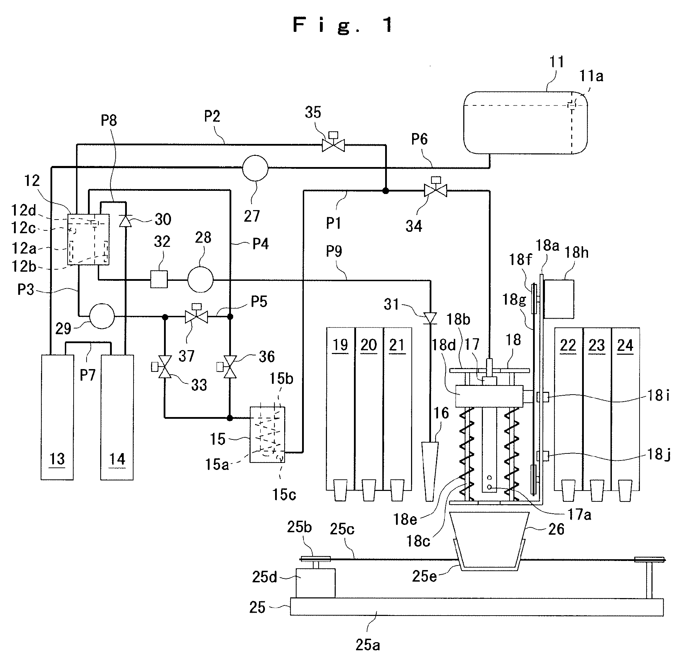

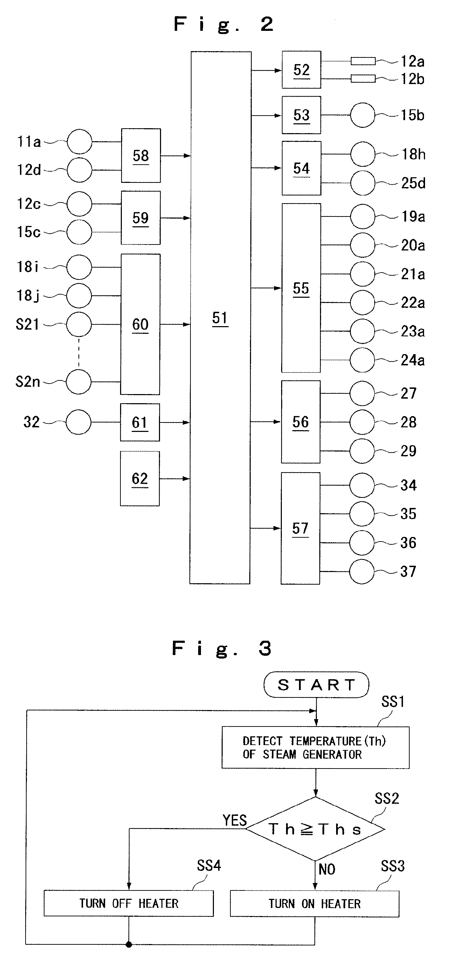

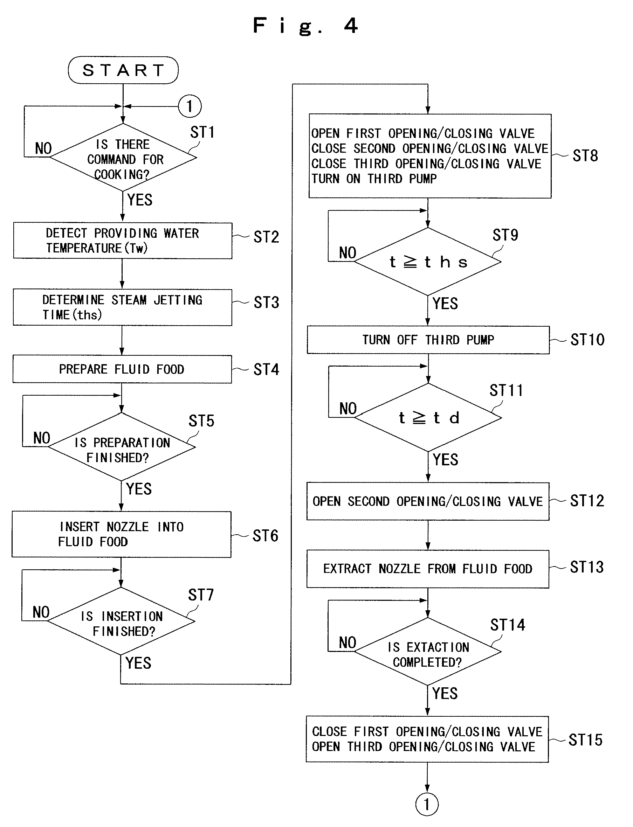

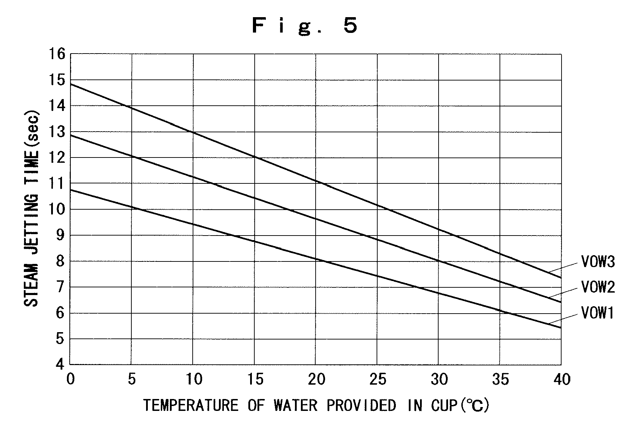

FIGS. 1 to 9 show an embodiment of the present invention. FIG. 1 is a block diagram of a fluid food heating device, FIG. 2 is an electric circuit diagram of the fluid food heating device shown in FIG. 1, FIG. 3 is a flowchart of a steam generator heating that is executed in the fluid food heating device shown in FIG. 1, FIG. 4 is a flowchart of a cooking of a fluid food that is executed in the fluid food heating device shown in FIG. 1, FIG. 5 is an explanatory diagram of a determination method executed at a steam jetting time determining step in FIG. 4, and FIGS. 6 to 9 are explanatory diagrams of an operation of the fluid food heating device shown in FIG. 1.

First, with reference to FIG. 1, a mechanism of the fluid food heating device will be described.

In FIG. 1, the reference numeral 11 denotes a water tank, the reference numeral 12 a cistern, the reference numeral 13 a soft water filter, the reference numeral 14 a sterilizing filter, the reference numeral 15 a steam generator, the reference numeral 16 a water providing nozzle, the reference numeral 17 a steam jetting nozzle, the reference numeral 18 a steam jetting nozzle hoisting mechanism, the reference numerals 19 to 24 material storage chambers, the reference numeral 25 a cup moving mechanism, the reference numeral 26 a cup, the reference numeral 27 a first solenoid pump, the reference numeral 28 a second solenoid pump, the reference numeral 29 a third solenoid pump, the reference numeral 30 a first check valve, the reference numeral 31 a second check valve, the reference numeral 32 a flow sensor, the reference numeral 33 a flow regulating valve, the reference numeral 34 a first solenoid opening/closing valve, the reference numeral 35 a second solenoid opening/closing valve, the reference numeral 36 a third solenoid opening/closing valve, and the reference numeral 37 denotes a fourth solenoid opening/closing valve.

The reference numeral P1 denotes a first duct that connects an outlet of the steam generator 15 and an inlet of the steam jetting nozzle 17, and the first opening/closing valve 34 is interposed in the first duct P1. The reference numeral P2 denotes a second duct that connects the upstream side of the first opening/closing valve 34 in the first duct P1 and a first inlet of the cistern 12, and the second opening/closing valve 35 is interposed in the second duct P2. The reference numeral P3 denotes a third duct that connects a first outlet of the cistern 12 and an inlet of the steam generator 15, and the third pump 29 and the flow regulating valve 33 are interposed in order in the third duct P3. The reference numeral P4 denotes a fourth duct that connects the downstream side of the flow regulating valve 33 in the third duct P3 and a second inlet of the cistern 12, and the third opening/closing valve 36 is interposed in the fourth duct P4. The reference numeral P5 denotes a fifth duct that connects a point between the third pump 29 in the third duct p3 and the flow regulating valve 33 and the downstream side of the third opening/closing valve 36 in the fourth duct P4, and the fourth opening/closing valve 37 is interposed in the fifth duct P5. The reference numeral P6 denotes a sixth duct that connects an outlet of the water tank 11 and an inlet of the soft water filter 13, and the first pump 27 is interposed in the sixth duct P6. The reference numeral P7 denotes a seventh duct that connects an outlet of the soft water filter 13 and an inlet of the sterilizing filter 14. The reference numeral P8 denotes an eighth duct that connects an outlet of the sterilizing filter 14 and a third inlet of the cistern 12, and the first check valve 30 is interposed in the eighth duct P8. The reference numeral P9 denotes a ninth duct that connects a second outlet of the cistern 12 and an inlet of the water providing nozzle 16, and the flow sensor 32, the second pump 28 and the second check valve 31 are interposed in order in the ninth duct P9.

Incidentally, the fifth duct P5 and the fourth opening/closing valve 37 are intended for air venting of the third pump 29, and the fourth opening/closing valve 37 is kept closed except during the air venting.

The water tank 11 is intended for storing tap water that becomes raw material water, and has a replenishment port for manual replenishment (not shown) and a water level sensor 11a, such as a float switch, for detecting the water level of the stored water. The water level sensor 11a is intended for promoting water replenishment by detecting the water level of the stored water in the water tank 11 and giving notification of the detected water level. If the water tank 11 is formed from a transparent or semi-transparent material so that the water level of the stored water can be visually checked, the water level sensor 11a is not always necessary. It is also possible to automatically perform water replenishment to the water tank 11 if a water pipe in which a solenoid opening/closing valve is interposed is connected to the water tank 11 and it is ensured that this opening/closing valve is opened and closed on the basis of a detection signal of the water level sensor 11a.

The cistern 12 performs the role of raising the chlorine concentration by electrolyzing the tap water, and has an anode 12a and a cathode 12b for electrolysis, a temperature sensor 12c, such as a thermistor, for detecting the temperature Tw of the stored water, and a water level sensor 12d, such as a float switch, for detecting the water level of the stored water. Incidentally, in this embodiment, the above-described cistern 12 corresponds to the "water storage device" mentioned in Claims, the above-described temperature sensor 12c corresponds to the "water temperature detecting means" mentioned in Claims, and the temperature Tw detected by the above-described temperature sensor 12c corresponds to the "water temperature" mentioned in Claims.

The soft water filter 13 performs the role of removing minerals from the tap water provided in from the water tank 11, and the sterilizing filter 14 performs the role of removing various germs and impurities from the tap water provided in from the soft water filter 13.

The steam generator 15 has: a main body block (no symbol) formed from a metal having good heat conductivity, such as aluminum; a spiral tube 15a made of a water resistant metal, such as stainless steel, which is buried in the main body block; an electric heater 15b, which is a heat source; and a temperature sensor 15c, such as a thermistor, for detecting the temperature Th of the main body block (the temperature of the steam generator 15). One end of the spiral tube 15a is an inlet of the steam generator 15 and the other end thereof is an outlet of steam generator 15. This steam generator 15 can heat and vaporize the water provided into the spiral tube 15a from the inlet at a prescribed flow rate while the water is passing through the spiral tube 15a to generate steam (containing superheated steam), and provide the generated steam from the outlet.

The steam jetting nozzle 17 is formed in the shape of a bottomed cylinder from a water repellent material, such as polypropylene, and has a plurality of steam jetting pores 17a in the lower portion thereof, which is inserted into the cup 26.

The steam jetting nozzle hoisting mechanism 18 has: a main frame 18a; a sub-frame 18b arranged on the main frame 18a via a plurality of guide rods 18c; a slider 18d capable of ascending and descending along the guide rods 18c; a plurality of coil springs 18e that urge the slider 18d upward; a pair of upper and lower pulleys 18f arranged on the main frame 18a; an endless belt 18g wound on the two pulleys 18f; a motor 18h that rotatably drives one of the pulleys 18f; a position sensor 18i, such as microswitch, which detects the ascent position of the slider 18d (steam jetting nozzle 17); and a position sensor 18j, such as a microswitch, which detects the descent position of the slider 18d (steam jetting nozzle 17). The slider 18d is connected to the endless belt 18g via a bracket and the like, and the steam jetting nozzle 17 is vertically attached to the slider 18d.

The material storage chambers 19 to 24 store solid materials, i.e., powder materials and ingredient materials, which are used in preparing a fluid food AF before heating, for example, a soup containing ingredients and a miso soup containing ingredients, separately for each kind of the solid materials. The powder materials include a consomme soup powder, a cream soup powder, a miso soup powder and the like, which are based on dissolution in water and hot water, and the ingredient materials include dried vegetable, dried meat and the like, which are based on reconstitution in water and hot water. Each of the material storage chambers 19 to 24 has a supply opening (no symbol) in the lower part at the front, a mechanism for providing a prescribed amount of a material from the supply opening (not shown), and a motor for moving the mechanism (19a to 24a, see FIG. 2).

The cup moving mechanism 25 has: a frame 25a; a pair of right and left pulleys 25b; an endless belt 25c wound on the two pulleys 25b; a motor 25d that rotates one of the pulleys 25b; a cup holder 25e in the shape of an inverted circular truncated cone connected to the endless belt 25c via a bracket and the like; and a plurality of position sensors S21 to S2n (see FIG. 2), such as microswitches, which detect the horizontal positions of the cup holder 25e. Each of the position sensors S21 to S2n is arranged so as to correspond to the material storage chambers 19 to 24, the water providing nozzle 16 and the steam jetting nozzle 17, and performs the role of determining the stop position of the cup holder 25e (cup 26) in performing material providing, water providing and steam jetting (heating of the fluid food AF).

The cup 26 is formed in the shape of an inverted circular truncated cone from paper or plastic and can be fitted into the cup holder 25e and removed therefrom.

Next, with reference to FIG. 2, a control system of the fluid food heating device shown in FIG. 1 will be described.

In FIG. 2, the reference numeral 51 denotes a controller, the reference numeral 52 a cistern driver, the reference numeral 53 a steam generator driver, the reference numeral 54 a motor driver, the reference numeral 55 a material storage chamber driver, the reference numeral 56 a pump driver, the reference numeral 57 a opening/closing valve driver, the reference numeral 58 a water level sensor detector, the reference numeral 59 a temperature sensor detector, the reference numeral 60 a position sensor detector, the reference numeral 61 a flow sensor detector, and the reference numeral 62 denotes a menu selector.

The controller 51 includes a microcomputer and sends out control signals to each of the drivers 52 to 57 according to various programs stored in the memory on the basis of signals from each of the detectors 58 to 60 and the menu selector 62.

The cistern driver 52 supplies prescribed power to the anode 12a and cathode 12b of the cistern 12 on the basis of control signals from the controller 51. The steam generator driver 53 supplies prescribed power to the heater 15a of the steam generator 15 on the basis of control signals from the controller 51. The motor driver 54 supplies prescribed power to each of the motor 18h of the steam jetting nozzle hoisting mechanism 18 and the motor 25d of the cup moving mechanism 25 on the basis of control signals from the controller 51. The material storage chamber driver 55 supplies prescribed power to the motors 19a to 24a of the material storage chambers 19 to 24 on the basis of control signals from the controller 51. The pump driver 56 supplies prescribed power to each of the first to third pumps 27 to 29 on the basis of control signals from the controller 51. The opening/closing valve driver 57 supplies prescribed power to each of the first to fourth opening/closing valves 34 to 37 on the basis of control signals from the controller 51.

The water level sensor detector 58 converts signals from the water level sensor 11a of the water tank 11 and the water level sensor 12d of the cistern 12 and sends out converted signals to the controller 51. The temperature sensor detector 59 converts signals from the temperature sensor 12c of the cistern 12 and the temperature sensor 15c of the steam generator 15 and sends out converted signals to the controller 51. The position sensor detector 60 converts signals from the position sensors 18i and 18j of the steam jetting nozzle hoisting mechanism 18 and the position sensors S21 to S2n of the cup moving mechanism 25 and sends out converted signals to the controller 51. The flow sensor detector 61 converts signals from the flow sensor 32 and sends out converted signals to the controller 51.

The menu selector 62 has at least a group of menu buttons and a cooking start button in order to select a menu of the fluid food (a soup containing ingredients, a miso soup containing ingredients and the like). Preparing data, such as kinds of materials and water amounts, corresponding to each menu is stored in the memory of the controller 51.

Next, with reference to FIGS. 3 to 9, an operation of the fluid food heating device shown in FIG. 1 will be described.

When the device has been powered on, the water level of the stored water in the water tank 11 is detected by the water level sensor 11a of the water tank 11 in accordance with an unillustrated detection flow. When the water level is not more than a prescribed level, a notice is sent to promote water replenishment to the water tank 11, for example, blinking of a light is performed.

Also, when the device has been powered on, the water level of the stored water in the cistern 12 is detected by the water level sensor 12d of the cistern 12 in accordance with an unillustrated detection flow. When the water level is not more than a prescribed level, the operation of the first pump 27 is started, the stored water in the water tank 11 is provided into the soft water filter 13 through the sixth duct P6, then from the soft water filter 13 into the sterilizing filter 14 through the seventh duct P7, and then from the sterilizing filter 14 into the cistern 12 through the eighth duct P8 and the first check valve 30. That is, after the power is turned on, the first pump 27 is intermittently operated on the basis of the water level of the stored water in the cistern 12, and this enables the water level of the stored water in the cistern 12 to be maintained substantially constant.

Furthermore, when the device has been powered on, the prescribed power is supplied to the anode 12a and cathode 12b in the cistern 12 for a prescribed time and the electrolysis of the stored water in the cistern 12 is carried out in accordance with an unillustrated electrolysis flow. That is, after the power is turned on, the power supply to the anode 12a and the cathode 12b is intermittently carried out, and this enables the stored water in the cistern 12 to be electrolyzed and the chlorine concentration of the stored water is raised, resulting in an improvement in safety.

Furthermore, when the device has been powered on, the heating of the steam generator 15 is started in accordance with the steam generator heating flow of FIG. 3. Specifically, after the turning-on of the power, the temperature Th of the steam generator 15 is detected by the temperature sensor 15c. The prescribed power is supplied to the heater 15b when the detected temperature Th is less than a temperature suitable for steam generation, for example, 180°C, whereas power supply to the heater 15b is stopped when the detected temperature Th is not less than a set temperature (refer to Steps SS1 to SS4 of FIG. 3). That is, after the turning-on of the power, the power supply to the heater 15b is intermittently carried out, and this enables the temperature Th of the steam generator 15 to be maintained at a temperature suitable for steam generation (approximately 180°C).

After the device has been powered on, in performing desired cooking of a fluid food AF, an empty cup 26 is fitted into the cup holder 25e of the cup moving mechanism 25, the group of menu buttons of the menu selector 62 is selectively depressed and the cooking start button is depressed. This button manipulation enables a command for cooking including the content of the selection menu (the material and water volume necessary for the preparation of the fluid food AF, which will be described later) from the menu selector 62 to the controller 51 (refer to Step ST1 of FIG. 4).

After the command for cooking has been input, the temperature Tw of the stored water in the cistern 12 is detected by the temperature sensor 12c in the cistern 12 and the steam jetting time ths is determined on the basis of the detected temperature Tw, the content of the selection menu and the like (refer to Steps ST2 and ST3 of FIG. 4). This steam jetting time ths is used as the operation time of the third pump 29 for providing the stored water in the cistern 12 into the steam generator 15.

Now a description will be given here of the first determination method of the steam jetting time ths carried out at Step ST3 and the second determination method that can be used in place of the first determination method.

### [First determination method]

The first determination method is a method that determines the steam jetting time ths (sec) by using the computing equation 1: steam jetting time ths (sec) = [{water volume (g) x (target temperature (°C) - water temperature Tw (°C))} / (vaporization heat of water (cal/g) x flow rate of water (g/sec))] / heating efficiency h.

The water volume (g) in the above-described computing equation 1 is the volume of the water provided from the water providing nozzle 16 into the cup 26 at Step ST4 of preparation which will be described later. The water temperature Tw (°C) is the temperature of the water provided from the water providing nozzle 16 into the cup 26 at Step ST4 of preparation which will be described later, and in this embodiment, the temperature Tw of the stored water detected at Step ST2 described above is used as the water temperature Tw (°C). The target temperature (°C) is the temperature of the fluid food AF after heating. The flow rate of water (g/sec) is the flow rate of the water provided into the inlet of the steam generator 15 through the flow regulating valve 33 by the operation of the third pump 29. The heating efficiency h is the thermal efficiency occurring when the water provided into the inlet of the steam generator 15 is heated and vaporized during the passing of the water.

For example, when the water volume (g) is 155 g, the target temperature (°C) is 80°C, the water temperature Tw (°C) is 20°C, the vaporization heat of water (cal/g) is 539 cal/g, the flow rate of water (g/sec) is 2 g/sec, and the heating efficiency h is 0.9, the steam jetting time ths found from the above computing equation 1 becomes 9. 6 seconds.

FIG. 5 shows results of computation of the steam jetting time ths (sec). In the figure, VOW1 indicates the computation result obtained when the water volume (g) is 130 g, VOW2 indicates the computation result obtained when the water volume (g) is 155 g, and VOW3 indicates the computation result obtained when the water volume (g) is 180 g.

Because the vaporization heat of water (cal/g) and heating efficiency h in the above computing equation 1 can be handled as fixed values, it follows that the steam jetting time ths (sec) can be determined according to the water temperature Tw (°C) when the water volume (g), the target temperature (°C) and the flow rate of water (g/sec) are constant.

### [Second determination method]

The second determination method is a method that determines the steam jetting time ths (sec) by using the computing equation 2: steam jetting time ths (sec) = standard time thb (sec) + { (standard water temperature Twb (°C) - water temperature Tw (°C)) x time coefficient C (sec)}. The standard time thb (sec) and standard water temperature Twb (°C) in the computing equation 2 are determined for each water volume and stored in the memory of the controller 51. Incidentally, the time coefficient C (sec) in the above computing equation 2 can be found, for example, by the equation: time coefficient C (sec) = water volume (g) / (vaporization heat of water (cal/g) x flow rate of water (g/sec) x heating efficiency h).

The introduce water temperature Tw (°C) in the above computing equation 2 is the temperature of the water provided from the water providing nozzle 16 into the cup 26 in Step ST4 of preparation which will be described later, and in this embodiment, the temperature Tw of the stored water detected at Step ST2 above is used as the water temperature Tw (°C). The time coefficient C (sec) is a coefficient whose unit is time.

For example, in a case where the standard time thb (sec) is 9. 6 seconds and the standard water temperature Twb (°C) is 20°C when the water volume (g) is 155 g, the steam jetting time ths found by the above computing equation 2 when the water temperature Tw (°C) is 22°C and the time coefficient C (sec) is 0.15 second becomes 9.3 seconds.

Because the standard water temperature Twb (°C) and time coefficient C (sec) in the above computing equation 2 can be handled as fixed values, it follows that the steam jetting time ths (sec) can be determined according to the water temperature Tw (°C) when the water volume (g) is constant.

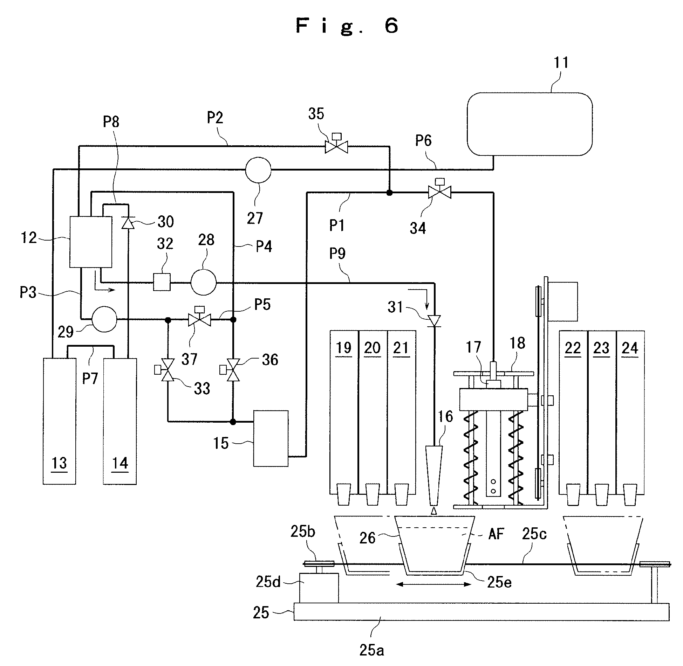

After the determination of the steam jetting time ths, as shown by an arrow in FIG. 6, a prescribed amount of the solid material (only the powder material or the powder material plus the ingredient material) corresponding to the content of the selection menu is provided from the predetermined material storage chambers (19 to 24) into the cup 26 and subsequently, the prescribed volume of water corresponding to the content of the selection menu is provided from the cistern 12 into the cup 26, whereby the predetermined fluid food AF before heating is prepared in the cup 26 (refer to Step ST4 of FIG. 4) .

The provision of the solid material into the cup 26 is performed by bringing the motor 25d into action on the basis of detection signals of the position sensors (S21 to S2n) so that the cup holder 25e of the cup moving mechanism 25 moves to under the supply opening of the prescribed material storage chamber (19 to 24) and stops there, and by bringing the motor (19a to 24a) of the material providing mechanism of the material storage chamber (19 to 24) into action in each stop position. The provision of the water into the cup 26 is performed by bringing the motor 25d into action on the basis of detection signals of the position sensors (S21 to S2n) so that the cup holder 25e of the cup moving mechanism 25 moves to under the water providing nozzle 16 and stops there, and by operating the second pump 28 in the stop position for a prescribed time on the basis of detection signals of the flow sensor 32.

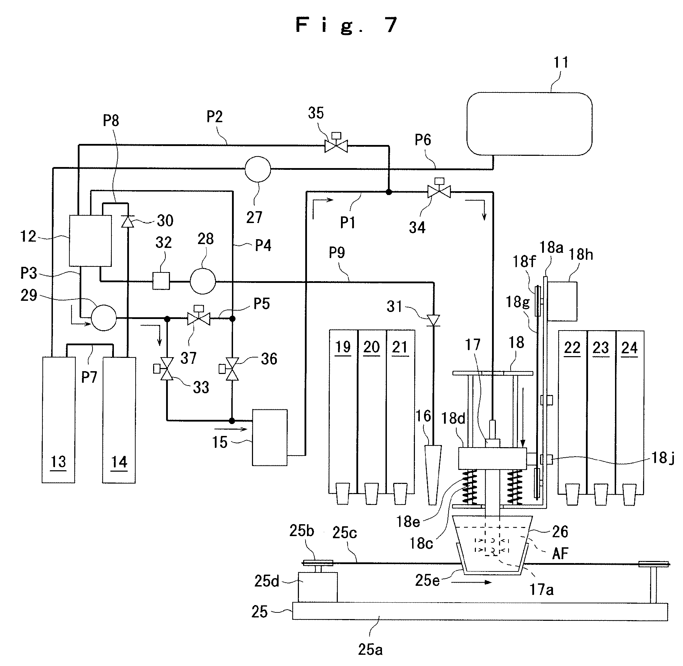

After the preparation of the fluid food AF has been completed, as shown by an arrow in FIG. 7, the lower portion of the steam jetting nozzle 17 is inserted into the fluid food AF in the cup 26 (refer to Steps ST5 and ST6 of FIG. 4).

The insertion of the lower portion of the steam jetting nozzle 17 into the fluid food AF is performed by bringing the motor 25d into action on the basis of detection signals of the position sensors (S21 to S2n) so that the cup holder 25e of the cup moving mechanism 25 moves to under the steam jetting nozzle 17 and stops there, and by bringing the motor 18h into action on the basis of detection signals of the position sensor 18j so that the slider 18d of the steam jetting nozzle hoisting mechanism 18 descends in this stop position and stops there.

After the insertion of the steam jetting nozzle 17 into the fluid food AF has been completed, as shown in FIG. 7, the first opening/closing valve 34 is opened, the second opening/closing valve 35 and the third opening/closing valve 36 are closed, and the operation of the third pump 29 is started, whereby the steam jetting from the steam jetting nozzle 17 into the fluid food AF is started (refer to Steps ST7 and ST8 of FIG. 4).

The steam jetting from the steam jetting nozzle 17 into the fluid food AF is performed by the operation of the third pump 29 by providing the stored water in the cistern 12 into the inlet of the steam generator 15 at a flow rate determined by the flow regulating valve 33. As described earlier, because the steam generator 15 is maintained at the temperature (approximately 180°C) suitable for steam generation, the water provided into the inlet of the steam generator 15 is heated and vaporized to become steam (including superheated steam) while passing through the spiral tube 15a, and the generated steam is provided from the outlet of the steam generator 15 into the steam jetting nozzle 17 through the first duct P1 and the first opening/closing valve 34.

Because the steam provided into the steam jetting nozzle 17 is jetted from the plurality of the steam jetting pores 17a arranged in the lower portion of the steam jetting nozzle 17 into the fluid food AF, the dissolution of the powder material contained in the fluid food AF and the reconstitution of the ingredient material are effectively performed by the stirring action caused by jetting and the whole fluid food AF is uniformly heated. Because the steam jetting into the fluid fold AF is continuously performed only during the steam jetting time ths determined at Step ST3 above, the temperature of the fluid food AF reaches the target temperature, for example, 80°C.

When the steam jetting time ths determined at Step ST3 above has elapsed since the start of the steam jetting, in other words, when the time ths has elapsed since the start of the operation of the third pump 29, the operation of the third pump 29 is stopped (refer to Steps ST9 and ST10 of FIG. 4).

Even after the stop of the third pump 29, the water remains a little in the spiral tube 15a of the steam generator 15 and, therefore, in actuality, steam generation continues for a while, concretely, for several seconds. For this reason, in this embodiment, in consideration of a time that elapses until the generated steam volume in the steam generator 15 decreases to a certain degree, a delay time td is set beforehand and the second opening/closing valve 35 is opened after the delay time td has elapsed (refer to Steps ST11 and ST12 of FIG. 4).

When the delay time td has elapsed, the generated steam volume in the steam generator 15 decreases. However, the steam is still present in the spiral tube 15a of the steam generator 15, the first duct P1, the first opening/closing valve 34 and the steam jetting nozzle 17, and the inner pressure is high. Therefore, if the steam jetting nozzle 17 is extracted from the fluid flood AFh after heating immediately after a lapse of the delay time td, the remaining steam would spout from the steam jetting nozzle 17 during the nozzle extraction and the spouting pressure would cause the fluid food AFh after heating to scatter, contaminating the cup 26 and surrounding equipment or the like.

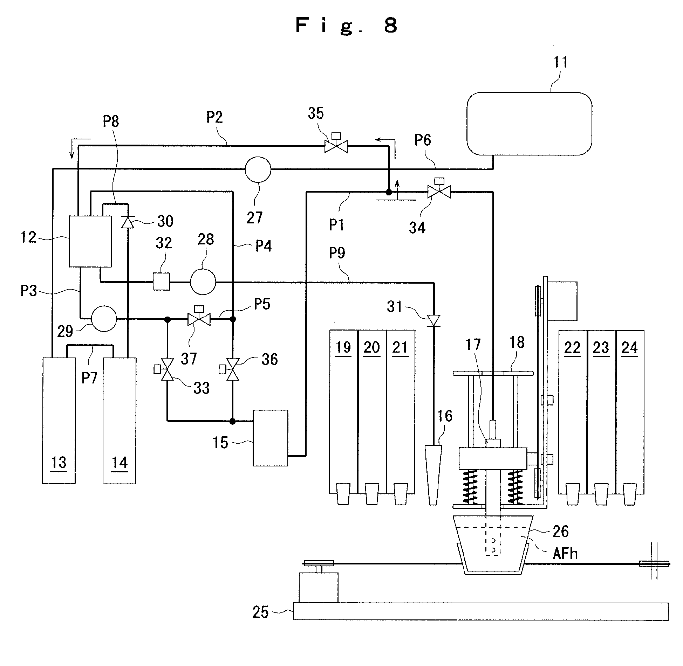

That is, instead of extracting the steam jetting nozzle 17 from the fluid food AFh after heating immediately after a lapse of the delay time td, by opening the second opening/closing valve 35 after a lapse of the delay time td, the second duct P2 is brought into communication with the first duct P1, whereby as indicated by an arrow in FIG. 8, the steam remaining in the spiral tube 15a of the steam generator 15, the first duct P1, the first opening/closing valve 34 and the steam jetting nozzle 17 is conducted into the second duct P2 and the inner pressure of the first duct P1 is reduced. The steam conducted into the second duct P2 by opening the second opening/closing valve 35 is returned through the second duct P2 and the second opening/closing valve 35 to the cistern 12, where the steam is used again. Although the above-described delay time td is not always necessary, it is possible to instantaneously perform the above-described reduction of the inner pressure by opening the second opening/closing valve after a decrease in the generated steam volume.

Because the inner pressure of the steam jetting nozzle 17 after a decrease in inner pressure becomes a pressure equal to the atmospheric pressure or slightly higher than the atmospheric pressure and does not become lower than the atmospheric pressure so long as the steam jetting nozzle 17 is not left standing until the time when steam generation stops completely, the fluid food AFh after heating will not be sucked into the steam jetting nozzle 17 during nozzle extraction.

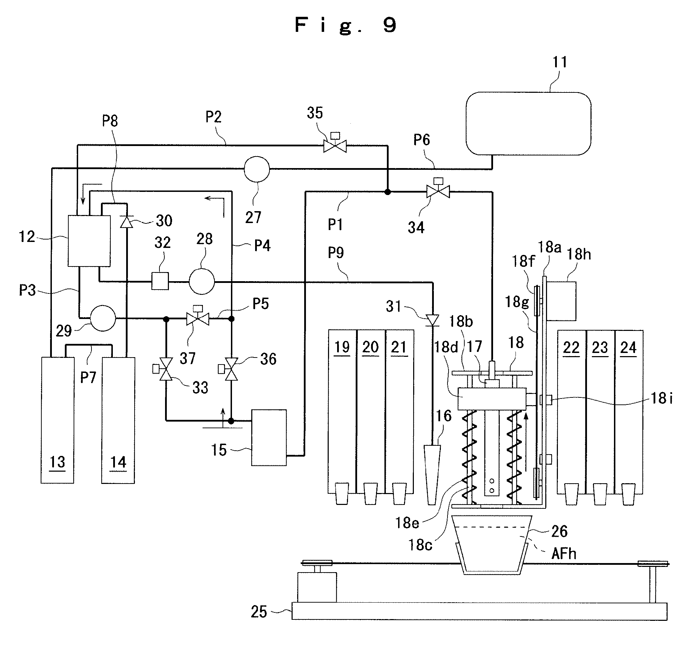

After the opening of the second opening/closing valve 35, as indicated by an arrow in FIG. 9, the steam jetting nozzle 17 is extracted from the fluid foodAFh after heating in the cup 26 (refer to Step ST13 of FIG. 4).

The extraction of the steam jetting nozzle 17 from the fluid food AFh after heating is performed by bringing the motor 18h into action on the basis of detection signals of the position sensor 18i so that the slider 18d of the steam jetting nozzle hoisting mechanism 18 ascends and stops.

After the extraction of the steam jetting nozzle 17 from the fluid food AFh after heating has been completed, the first opening/closing valve 34 is closed and the third opening/closing valve 36 is opened, whereby a series of heating cooking actions is finished (refer to Steps ST14 and ST15 of FIG. 4).

With the operation of the third pump 29 kept stopped at Step ST10 above, a small volume of water stagnates on the downstream side of the third pump 29 in the third duct P3 and in the flow regulating valve 33 and the stagnant water cannot be said to be desirable in terms of hygiene because of the fear of fouling and propagation of various germs. For this reason, at Step ST15 above, after the extraction of the steam jetting nozzle 17 from the fluid food AFh after heating, the fourth duct P4 is brought into communication with the third duct P3 by opening the third opening/closing valve 36, whereby as indicated by an arrow in FIG. 9, the water present on the downstream side of the third pump 29 in the third duct P3 and in the flow regulating valve 33 is conducted into the fourth duct P4 and returned to the cistern 12 thereby to perform drainage. The water returned to the cistern 12 is used again in the same manner as the above-described remaining steam.

According to the above-described fluid food heating device, the temperature Tw of the stored water in the cistern 12 is detected through the temperature sensor 12c arranged in the cistern 12 and the steam jetting time ths is determined by using the temperature Tw as the water temperature Tw of each of the computing equations 1 and 2 for determining steam jetting time. Therefore, regardless of the temperature of the fluid food AF before heating and without the detection of the temperature of the fluid food AF during heating directly by the temperature sensor, the fluid food AF can be heated to the target temperature by jetting steam to the fluid flood AF on the basis of the steam jetting time ths determined according to the water temperature Tw.

Also, according to the above-described fluid food heating device, by arranging the temperature sensor 12c in the cistern 12, the temperature Tw of the stored water in the cistern 12 detected through this temperature sensor 12c is used as the water temperature Tw of each of the computing equations 1 and 2 for determining steam jetting time and, therefore, the temperature of the water provided in the cup 26 can be accurately detected. Because the object of arrangement of the temperature sensor 12c is the cistern 12, the arrangement of the temperature sensor 12c can be easily performed.

Furthermore, according to the above-described fluid food heating device, the determined steam jetting time ths is used as the operation time of the third pump 29 for providing the stored water in the cistern 12 into the steam generator 15, the time control of steam jetting to the fluid food AF can be appropriately performed by performing the start and stop of the operation of the third pump 29 according to the steam jetting time ths.

Furthermore, according to the above-described fluid food heating device, the steam jetting time ths is computed by each of the computing equations 1 and 2 for determining steam jetting time, which includes the water temperature Tw as a variable. Therefore, according to the water temperature Tw, it is possible to appropriately determine the steam jetting time ths necessary for heating the fluid flood AF to the target temperature.

Incidentally, in the above-described embodiment, the temperature sensor 12c is arranged in the cistern 12 and the temperature Tw of the stored water in the cistern 12 detected through this temperature sensor 12c is used as the water temperature Tw of each of the computing equations 1 and 2 described in Step ST3.

However, it is also possible to adopt the following method instead of this method:
(a1) a method that involves arranging a temperature sensor that can be used in place of the above-described temperature sensor 15c in the ninth duct P9 that connects the cistern 12 and the water providing nozzle 16 and using the temperature of the flowing water in the ninth duct P9 detected through this temperature sensor as the water temperature Tw of each of the computing equations 1 and 2 described in Step ST3; and
(a2) a method that involves arranging a temperature sensor that can be used in place of the above-described temperature sensor 12c in the water providing nozzle 16 and using the temperature of the flowing water in the water providing nozzle 16 detected through this temperature sensor as the water temperature Tw of each of the computing equations 1 and 2 described in Step ST3.

Because the method that involves arranging the temperature sensor in the water providing nozzle 16 can more accurately detect the temperature of the water immediately before introduction, it is possible to more appropriately determine the steam jetting time ths.

As a matter of course, it is also possible to adopt the following methods besides the above-described methods:
(a3) a method that involves arranging a temperature sensor that can be used in place of the above-described temperature sensor 12c in the water tank 11 (corresponding to the "water storage device" mentioned in Claims) and using the temperature of the stored water in the water tank 11 detected through this temperature sensor as the water temperature Tw of each of the computing equations 1 and 2 described in Step ST3; and
(a4) a method that involves arranging a temperature sensor that can be used in place of the above-described temperature sensor 12c in any of the sixth duct P6 that connects the water tank 11 and the cistern 12, the seventh duct P7 and the eighth duct P8 and using the temperature of the flowing water in any of the sixth duct p6, the seventh duct P7 and the eighth duct P8 detected through this temperature sensor as the water temperature Tw of each of the computing equations 1 and 2 described in Step ST3.

In the above-described embodiment, the steam jetting time ths is determined by each of the computing equations 1 and 2 for determining steam jetting time. However, it is possible to adopt the following methods:
(b1) a method that involves preparing beforehand a data table for determining steam jetting time for each water volume and the like, in which the water temperature is used at least as a parameter, on the basis of computation results of the computing equation 1 or 2, storing the data table in the memory of the controller 51, and determining the steam jetting time from the water temperature by using the data table; and
(b2) a method that involves preparing beforehand a data table for determining steam jetting time for each water volume and the like, in which the water temperature is used at least as a parameter, on the basis of results obtained in prior experiments and the like regardless of the computation results of the above computing equation 1 or 2, storing the data table in the memory of the controller 51, and determining the steam jetting time from the water temperature by using the data table.

### [Another embodiment of the invention]

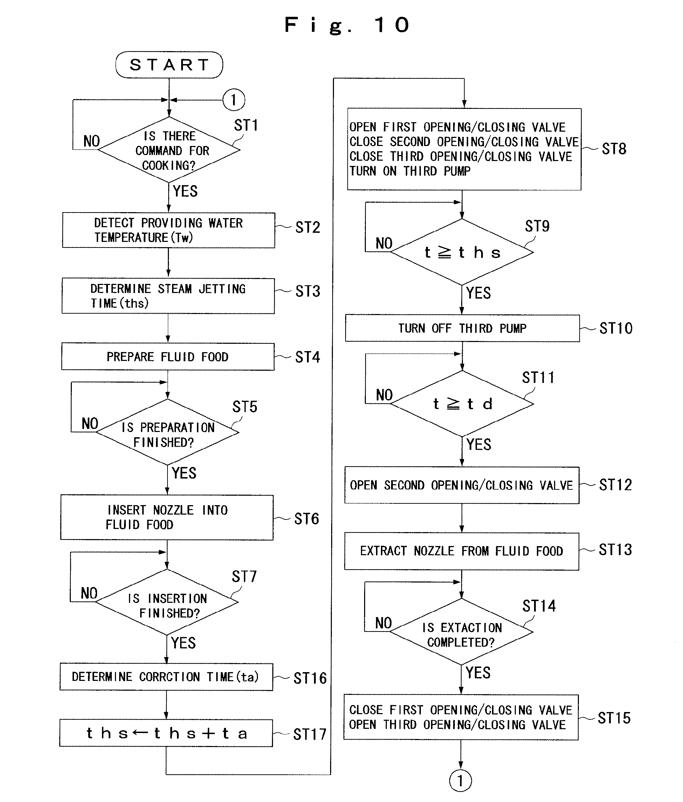

FIG. 10 is a flowchart of the cooking of the fluid food in another embodiment of the present invention. The flow of the cooking of the fluid food shown in FIG. 10 differs from the flow of the cooking of the fluid food shown in FIG. 4 in that between Step ST7 and Step ST8 there are added Step ST16, at which correction time ta is determined, and Step ST17, at which there is set a new steam jetting time ths obtained by adding correction time ta determined at step ST16 to the steam jetting time ths determined at Step ST3.

When the steam generated in the steam generator 15 is provided into the steam jetting nozzle 17 through the first duct P1 and the first opening/closing valve 34, part of the total heat quantity of the steam provided from the steam generator is taken by the first duct P1, the first opening/closing valve 34 and the steam jetting nozzle 17, and this is considered in the correction time ta determined at Step ST16.

To sum up, when the situation is such that part of the total heat quantity of the steam provided from the steam generator 15 is taken by the first duct P1, the first opening/closing valve 34 and the steam jetting nozzle 17, even when the third pump 29 is operated on the basis of the steam jetting time ths determined at Step ST3, the temperature of the fluid food AFh after heating becomes lower than the target temperature, for example, 80°C.

In such a situation, therefore, if the correction time ta that is long enough to compensate for the heat quantity capable of being taken by the first duct P1, the first opening/closing valve 34 and the steam jetting nozzle 17, is added to the steam jetting time ths determined at step ST3 and the resultant time is used as new steam jetting time ths, then even in this situation, it is possible to positively heat the fluid food AF to the target temperature, for example, 80°C.

Now a description will be given here of the first determination method of the correction time ta carried out at Step ST16 and the second determination method that can be used in place of the first determination method.

### [First determination method]

The first determination method is a method that determines the correction time ta to be added to the steam jetting time ths determined at Step ST16 on the basis of elapsed time from a point in time of completion of the last cooking to a point in time of start of the present cooking.

In carrying out this first determination method, it is ensured that the time from a point in time of completion of the last cooking to a point in time of start of the present cooking can be measured by the controller 51. A data table for determining correction time, in which elapsed time is used at least as a parameter, is prepared beforehand on the basis of results obtained from prior experiments and the like by use of the fluid flood heating device shown in FIG. 1, and this data table is stored in the memory of the controller 51. Incidentally, the point in time of completion of the last cooking refers concretely to a point in time of completion of steam jetting (a point in time of stop of the operation of the third pump 29 (Step ST9)), and a point in time of start of the present cooking refers concretely to a point in time of start of steam jetting (a point in time of start of the operation of the third pump 29 (Step ST8)).

The determination of the correction time ta is performed by selecting the correction time ta from the above-described data table on the basis of the measured elapsed time. At the first cooking after the turning-on of the power, it is ensured that the correction time ta is selected on the basis of the longest elapsed time in the above-described data table.

For example, when the elapsed time (min) is not less than 15 minutes and when the first cooking is done after the turning-on of the power, 1.5 seconds are set as the correction time ta. Also, when the elapsed time (min) is less than 15 minutes but not less than 10 minutes, 1.0 second is set as the correction time ta. Furthermore, when the elapsed time (min) is less than 10 minutes but not less than 5 minutes, 0.5 second is set as the correction time ta. Moreover, when the elapsed time (min) is less than 5 minutes, 0 second is set as the correction time ta.

That is, when the steam jetting time ths determined at Step ST3 is, for example, 10.0 seconds, the new steam jetting time ths found at Step ST17 when the elapsed time (min) is not less than 15 minutes and when the first cooking is done after the turning-on of the power becomes 11.5 seconds. Also, the new steam jetting time ths found at Step ST17 when the elapsed time (min) is less than 15 minutes but not less than 10 minutes becomes 11.0 seconds. Furthermore, the new steam jetting time ths found at Step ST17 when the elapsed time (min) is less than 10 minutes but not less than 5 minutes becomes 10.5 seconds. Moreover, the new steam jetting time ths found at Step ST17 when the elapsed time (min) is less than 5 minutes becomes 10.0 seconds.

If a data table in which the correction time is allotted by dividing the elapsed time more finely than in the above-described examples is used, it is possible to more accurately perform the determination of the correction time ta and the setting of the new steam jetting time ths on the basis of elapsed time. As a matter of course, the above-described data table may be prepared for each water volume or may be used for all water volumes. Because the heat quantity taken by the first duct P1, the first opening/closing valve 34 and the steam jetting nozzle 17 vary under the effect of the ambient temperatures of these parts, it is also possible to adopt a method that involves preparing beforehand a data table for adjusting the correction time, in which the correction time ta and ambient temperature are at least used as parameters, and adjusting the determined correction time ta on the basis of the ambient temperature. Furthermore, in determining the above-described correction time ta, it is also possible to adopt a method that involves fixing beforehand a computing equation for determining correction time, in which elapsed time (min) is used as a variable, and determining the correction time ta by using the computing equation without using the above-described data table.

### [Second determination method]

The second determination method is a method that determines the correction time ta to be added to the steam jetting time ths determined at Step ST16 on the basis of the temperature of the piping through which the steam delivered from the steam generator 15, i.e., the first duct P1, the first opening/closing valve 34 and the steam jetting nozzle 17 flows (hereinafter referred to as piping temperature) .

In carrying out the second determination method, a temperature sensor, such as a thermistor, is arranged in at least one of the first duct p1, the first opening/closing valve 34 and the steam jetting nozzle 17 to ensure that the piping temperature detected by this temperature sensor is sent to the controller 51 through the temperature sensor detector 59. A data table for determining correction time, in which the piping temperature is used at least as a parameter, is prepared beforehand on the basis of results obtained from prior experiments and the like by use of the fluid flood heating device shown in FIG. 1, and this data table is stored in the memory of the controller 51.

The determination of the correction time ta is performed by selecting a suitable correction time ta from the above-described data table on the basis of the detected piping temperature. When the temperature sensor is arranged in two or more of the first duct P1, the first opening/closing valve 34 and the steam jetting nozzle 17, an average value of values obtained in the two or more temperature sensors is used as the piping temperature.

For example, when the piping temperature (°C) is less than 50°C, 1.5 seconds are set as the correction time. Also, when the piping temperature (°C) is not less than 50°C but less than 70°C, 1.0 second is set as the correction time ta. Furthermore, when the piping temperature (°C) is not less than 70°C but less than 90 °C, 0.5 second is set as the correction time ta. Moreover, when the piping temperature (°C) is not less than 90°C, 0 second is set as the correction time ta.

That is, when the steam jetting time ths determined at Step ST3 is, for example, 10.0 seconds, the new steam jetting time ths found at Step ST17 when the piping temperature (°C) is less than 50°C becomes 11.5 seconds. Also, the new steam jetting time ths found at Step ST17 when the piping temperature (°C) is not less than 50°C but less than 70°C becomes 11.0 seconds. Furthermore, the new steam jetting time ths found at Step ST17 when the piping temperature (°C) is not less than 70°C but less than 90°C becomes 10.5 seconds. Moreover, the new steam jetting time ths found at Step ST17 when the piping temperature (°C) is not less than 90°C becomes 10.0 seconds.

If a data table in which the correction time is allotted by dividing the piping temperature more finely than in the above-described examples is used, it is possible to more accurately perform the determination of the correction time ta and the setting of the new steam jetting time ths on the basis of the piping temperature. As a matter of course, the above-described data table may be prepared for each water volume or may be used for all water volumes. In determining the above-described correction time ta, it is also possible to adopt a method that involves fixing beforehand a computing equation for determining correction time, in which the piping temperature °C is used as a variable, and determining the correction time ta by using the computing equation without using the above-described data table.

The embodiments described in this specification are illustrative only and are not restrictive in any sense. The scope of the present invention is shown by the accompanying claims, and all modifications included in the meanings of these claims are included by the present invention.

## Claims

1. A fluid food heating device for jetting steam from a steam jetting nozzle (17) into a fluid food (AF) including a solid material and water provided in a cup (26) and heating the fluid food (AF) to a target temperature by a jet steam, comprising:
water temperature detecting means (12c) for detecting a temperature of the water to be provided in the cup (26) ; and
steam jetting time determining means (51) for determining a steam jetting time (ths) on the basis of a water temperature (Tw) detected by the water temperature detecting means (12c).

2. The fluid food heating device according to claim 1, further comprising:
a water storage device (12) for storing the water to be provided in the cup (26);
a water providing nozzle (16) for providing the water into the cup (26) ;
a duct (P9) connected the water storage device (12) and the water providing nozzle (16); and
a pump (28) interposed in the duct (P9),
wherein the water temperature detecting means (12c) is arranged in any one of the water storage device (12), the water providing nozzle (16) and the duct (P9).

3. The fluid food heating device according to claim 2, further comprising:
a steam generator (15) for generating steam by heating the water;
a duct (P3) connected an inlet of the steam generator (15) and the water storage device (12) and having a pump (29) interposed therein; and
a duct (P1) connected an outlet of the steam generator (15) and the steam jetting nozzle (17),
wherein the steam jetting time (ths) is used as an operating time of the pump (29) that provides the water in the water storage device (12) to the inlet of the steam generator (15).

4. The fluid food heating device according to claim 1, wherein the steam jetting time determining means (51) determines the steam jetting time (ths) on the basis of a computing equation including the water temperature (Tw) as a variable.

5. The fluid food heating device according to claim 4, wherein the computing equation is steam jetting time (sec) = [{water volume (g) x (target temperature (°C) - water temperature (°C))} / (vaporization heat of water (cal/g) x flow rate of water (g/sec))] / heating efficiency.

6. The fluid food heating device according to claim 4, wherein the computing equation is steam jetting time (sec) = standard time (sec) + {(standard water temperature (°C) - water temperature (°C)) x time coefficient (sec)}, and the standard time is determined for each water volume.

7. The fluid food heating device according to claim 1, wherein the steam jetting time determining means (51) determines the steam jetting time (ths) from the water temperature (Tw) by using a data table for determining the steam jetting time (ths), which is prepared beforehand by using the water temperature (Tw) at least as a parameter of the data table.

8. The fluid food heating device according to claim 7, wherein a value of the steam jetting time (ths) in the data table is based on a computation result of the computing equation of claim 5 or 6.

9. The fluid food heating device according to claim 1, further comprising:
correction time determining means (51) for determining a correction time (ta) to be added to the steam jetting time (ths) on the basis of an elapsed time from a point in time of completion of last time cooking to a point in time of start of this time cooking; and
steam jetting time adjusting means (51) for setting a new steam jetting time (ths) by adding the correction time (ta) determined by the correction time determining means (51) to the steam jetting time (ths).

10. The fluid food heating device according to claim 9, wherein the correction time determining means (51) determines the correction time (ta) from the elapsed time by using a data table for determining the correction time (ta), which is prepared beforehand by using the elapsed time at least as a parameter of the data table.

11. The fluid food heating device according to claim 1, further comprising:
correction time determining means (51) for determining a correction time (ta) to be added to the steam jetting time (ths) on the basis of a temperature of a steam flow piping including the steam jetting nozzle (17); and
steam jetting time adjusting means (51) for setting a new steam jetting time (ths) by adding the correction time (ta) determined by the correction time determining means (51) to the steam jetting time (ths).

12. The fluid food heating device according to claim 11, wherein the correction time determining means (51) determines the correction time (ta) from the temperature of the steam flow piping by using a data table for determining the correction time (ta), which is prepared beforehand by using the temperature of the steam flow piping at least as a parameter of the data table.
